# EUROPEAN PATENT APPLICATION

(11) **EP 1 670 149 A1**
(43) Date of publication of application: **14.06.2006**
(21) Application number: 04292976.0
(22) Date of filing: 13.12.2004
(51) Int. Cl.: H04B 1/40, H04Q 7/30

(54) **GSM/UMTS base station transceiver with variable bandwidth and combined antenna/receiver unit**

(71) Applicant: Evolium S.A.S., 75008 Paris (FR)
(72) Inventor: Neustadt, Alf, 70180 Stuttgart (DE)
(74) Representative: Schäfer, Wolfgang

(57) **Abstract**

The present invention relates to a transmitter (300) for transmitting signals according to at least a first mode, in particular a GSM (Global Systems for Mobile Communications) mode, characterized in that a transmitting path (Tx) of said transmitter (300) is capable of processing baseband signals having different bandwidths.

The present invention also relates to a receiver (400) for receiving signals according to at least a first mode, in particular a GSM (Global Systems for Mobile Communications) mode, characterized in that a receiving path (Rx) of said receiver (400) is capable of processing baseband signals having different bandwidths.

The present invention further relates to a transceiver (100) comprising a transmitting path (Tx) and a receiving path (Rx) for transmitting/receiving signals according to at least a first mode, in particular a GSM mode, wherein said transmitting path (Tx) comprises radio frequency (RF) transmitting circuitry (70), and wherein said receiving path (Rx) comprises radio frequency (RF) receiving circuitry (80). The transceiver (100) is characterized by said transmitting path (Tx) comprising modulation means (10) capable of combining one or more input signals (SCI_1, SC1_2 ...) to obtain a multi-carrier output signal (MCO).

The present invention further relates to a combined antenna receiver unit (65) and a base station (200) for a cellular communications network.

## Description

The present invention relates to a transmitter for transmitting signals according to at least a first mode, in particular a GSM (Global Systems for Mobile Communications) mode.

The present invention also relates to a receiver for receiving signals according to at least a first mode, in particular a GSM (Global Systems for Mobile Communications) mode.

The present invention further relates to a transceiver comprising a transmitting path and/or a receiving path for transmitting and/or receiving signals according to at least a first mode, in particular a GSM (Global System for Mobile Communications) mode, wherein said transmitting path comprises radio frequency (RF) transmitting circuitry and wherein said receiving path comprises radio frequency (RF) receiving circuitry.

The present invention further relates to a combined antenna receiver unit and a base station for a cellular communications network.

GSM (Global System for Mobile Communications) transmitters, receivers and transceivers are known from prior art and are e.g. used within base stations of cellular communications networks according to the GSM standard to transmit and receive signals via a wireless, i.e. radio frequency (abbreviated as 'RF' in the further description) interface. Within GSM communications networks, said base stations are also denoted as base transceiver stations (BTS).

Next generation communications networks such as UMTS (Universal Mobile Telecommunications System) have severe problems to be deployed at least in areas having a lower population density. This is mainly due to a high operating frequency of about 2000 MHz and the corresponding propagation characteristics and a comparatively low transmission power of 21 dBm of mobile terminals.

Consequently, for mobile network operators it is desirable to provide a suitable migration path for upgrading existing infrastructure devices such as base stations from GSM conformance to UMTS compatibility for instance, instead of necessitating huge investments for replacing an existing GSM infrastructure by a completely new UMTS infrastructure.

Therefore it is an object of the present invention to provide a transmitter, a receiver, a transceiver, a combined antenna receiver unit and a base station of the above mentioned kind, which enable a gradual migration from an existing communications infrastructure to next generation communications networks such as UMTS and at the same time provide a high degree of flexibility.

Concerning the transmitter, the object of the present invention is achieved by a transmitting path of said transmitter being capable of processing baseband signals having different bandwidths. Thus it is possible to process e.g. GSM and UMTS signals.

According to a very advantageous embodiment of the present invention, said transmitting path of the transmitter is switchable from a low bandwidth, in particular a bandwidth of about several hundred kHz, to a high bandwidth, in particular a bandwidth of about 20 MHz.

According to a further advantageous embodiment of the present invention, said transmitter comprises modulation means capable of combining one or more input signals to obtain a multi-carrier output signal. Hence it is possible to process multi-carrier signals which are e.g. used by next generation communications networks such as UMTS (Universal Mobile Telecommunications System) within said transmitting path of the transceiver. Said multi-carrier signals are e.g. obtained in accordance to CDMA (Code Division Multiple Access) schemes which are per se known (cf. Banet et. al.: UMTS; Hüthig, 2004). This way, an existing GSM transceiver can advantageously be used to transmit in a GSM mode according to prior art and, further, in a UMTS mode according to the present invention.

Another advantageous variant of the inventive transmitter is characterized by a high speed interface which enables said transmitter to process in particular baseband data with a data rate corresponding to said high bandwidth of said transmitting path.

Another advantageous variant of the inventive transmitter is characterized by said transmitting path comprising a clipper. Said clipper may e.g. limit an amplitude of said one or more input signals so as to enable operating an amplifier provided for amplifying said multi-carrier output signal at an optimal operating point. A variant of such a clipper is disclosed in US 2003/0092462 A1.

Concerning the receiver, the object of the present invention is achieved in that a receiving path of said receiver is capable of processing baseband signals having different bandwidths.

Further advantageous embodiments of the inventive receiver are presented in claims 7 to 8.

The inventive receiver is capable of processing GSM signals and UMTS signals, and according to an especially advantageous embodiment, said receiving path is switchable between a low bandwidth and a high bandwidth.

Concerning the transceiver, the object of the present invention is achieved by said transmitting path comprising modulation means capable of combining one or more input signals to obtain a multi-carrier output signal. Hence it is possible to process multi-carrier signals which are e.g. used by next generation communications networks such as UMTS (Universal Mobile Telecommunications System) within said transmitting path of the transceiver, as already described above. This way, an existing GSM transceiver can advantageously be used to transmit in a GSM mode according to prior art and, further, in a UMTS mode according to the present invention.

Though usually a plurality of input signals are combined within the inventive transceiver, it is also possible to process a single input signal, which actually leads to an output signal having only one carrier. It is to be understood that such a case of a single input signal is meant to be included in the following description although the output signal of the modulation means is denoted as multi-carrier output signal. I.e. the invention is not limited to processing a plurality of input signals within said transceiver.

An advantageous embodiment of the present invention is characterized by comprising a combined antenna receiver unit, wherein said combined antenna receiver unit comprises an antenna network, radio frequency receiving circuitry and demodulation means for obtaining one or more output signals from a multi-carrier input signal.

The combined antenna receiver unit advantageously comprises all RF signal processing means necessary for converting RF signals received by said antenna network to a lower, e.g. an intermediate, frequency (IF) level or even into baseband signals and therefore provides a separation of RF circuitry within said combined antenna receiver unit. No RF signal processing is required within following stages of said receiving path, i.e. after passing said demodulation means, said output signal(s) may directly be passed to baseband processing means.

Another embodiment of the present invention is characterized by said receiving path comprising demodulation means, in particular for obtaining one or more output signals from a multi-carrier input signal. This enables to process e.g. a CDMA multi-carrier signal according to the UMTS standard within said transceiver without requiring an extra receiving path. For instance, according to the present invention it is possible to receive both GSM signals and UMTS signals by means of said receiving path originally provided only for GMS operation. The corresponding demodulation of a multi-carrier signal not provided for by a mere GSM receiving system is provided by said demodulation means.

Depending on the type of signal to be transmitted and/or received, said transmitting path and/or said receiving path have to have a corresponding bandwidth, in particular for processing baseband signals. Said bandwidth is far below 1 MHz for GSM signals and about 20 MHz for a multi-carrier signal according to UMTS which usually comprises four carriers each providing a bandwidth of 5 MHz for a respective frequency channel assigned to said carrier.

Yet a further variant of the present invention is characterized by comprising a high speed interface, in particular for connecting baseband processing means to said modulation means and/or to said demodulation means. This is particularly useful for providing baseband signals which have been obtained by previously receiving and demodulating a UMTS signal within said receiving path to said baseband processing means. In turn, said baseband processing means may also have to provide baseband signals to said transmitting path for modulation and transmission via an RF interface of said transceiver. Since GSM transceivers are usually equipped with a comparatively slow interface, said high speed interface according to the present invention provides for comparatively high transmission rates adequate for UMTS baseband signals.

Another variant of the present invention is characterized by said transmitting path comprising a clipper. Said clipper may e.g. limit a signal amplitude so as to enable operating an amplifier provided for amplifying said multi-carrier output signal at an optimal operating point. A variant of such a clipper is disclosed in US 2003/0092462 A1.

A further advantageous embodiment of the present invention is characterized by a radio frequency (RF) interface, in particular for transmitting and/or receiving a radio frequency signal from an antenna network and/or a said combined antenna receiver unit.

A further advantageous variant of the present invention is characterized by comprising at least one further receiving path, which allows for separately receiving a UMTS signal via said further receiving path while leaving a GSM receiving path operable for receiving GSM signals.

A further advantageous variant of the present invention is characterized by said further receiving path comprising radio frequency receiving circuitry and/or demodulation means. It is hence possible to directly connect said further receiving path to an antenna network or another source of a received RF signal. Said antenna network may e.g. comprise an antenna duplexer or an antenna filter or the like.

Furthermore, with said demodulation means, said further receiving path can directly provide a baseband signal obtained by said demodulation means to e.g. baseband processing means. It is also possible to provide said further receiving path with a corresponding high speed interface as described above or to also connect said further receiving path to an already existing high speed interface, which enables to provide wideband, i.e. 20MHz, UMTS baseband signals to be exchanged with baseband processing means.

According to another advantageous embodiment of the present invention, said transceiver comprises a combined antenna receiver unit according to one of the claims 19 to 21.

Another advantageous embodiment of the present invention comprises a controller which controls the transceiver. Said controller may perform known control functions as well as a control of the transceiver regarding a signal transmission mode. For instance, the controller can activate or deactivate modulation means/demodulation means or other components of the transceiver according to the present invention which are required for a single transmission mode only, e.g. during GSM operation or during UMTS operation, respectively. As an example, said controller may deactivate demodulation means for demodulating a multi-carrier signal and may further switch signal processing means to a comparatively small bandwidth such as e.g. several 100kHz when a GSM operation is to be performed. In turn, said demodulation means may also be activated and said signal processing means may be switched to a comparatively large bandwidth of about 20 MHz by said controller in case a UMTS operation of said transceiver is desired.

According to a further embodiment of the present invention, said transceiver is capable of using a frequency range of approximately 800 MHz to approximately 2600 MHz for transmitting/receiving said signals. I.e. RF circuitry provided within said receiver as well as in its transmitting and/or receiving path and/or antenna network provide operation at a respective bandwidth.

Especially, said transceiver according to the present invention is capable of using a frequency range of approximately 890 MHz to approximately 960 MHz and/or a frequency range of approximately 1710 MHz to approximately 1810 MHz and/or a frequency range of approximately 1850 MHz to approximately 1990 MHz for transmitting/receiving said signals, said frequency ranges corresponding to frequency ranges currently being used for GSM systems which allows to use e.g. an existing antenna and RF cable infrastructure as well as mobile terminals tuned to said frequency ranges.

Additionally, said transceiver is capable of using a frequency range of approximately 2110 MHz to approximately 2170 MHz which corresponds to a UMTS downlink band, cf. 3GPP 25.104 (www.3gpp.org).

A further advantageous embodiment of the present invention is given by a transceiver which is characterized in that components of said transceiver which process in particular baseband signals are switchable regarding to a bandwidth of said baseband signals, in particular between a first bandwidth of about a few hundred kHz and a second bandwidth of about 20 MHz, which corresponds to a GSM mode of operation and a UMTS mode of operation, respectively.

According to a further variant of the present invention, said transceiver is characterized by being capable of processing signals according to a GSM (Global System for Mobile Communications) standard and/or according to a UMTS (Universal Mobile Telecommunications System) standard.

Although the term transceiver usually denotes a combination of a transmitter and a receiver, the present invention is not limited to such a combination. According to the present invention, said transceiver may solely comprise a transmitting path or a receiving path or a plurality thereof, respectively. In this case, the respective transceiver only comprises a transmitting function or a receiving function.

A further solution to the object of the present invention is given by a combined antenna receiver unit which comprises an antenna network and radio frequency receiving circuitry thus minimizing a length of RF cables and RF connections required or even eliminating the need for an RF connector if demodulation of a received RF signal is also provided by said radio frequency receiving circuitry.

A further advantageous embodiment of the combined antenna receiver circuit according to the present invention is characterized by demodulation means for obtaining one or more output signals from a multi-carrier input signal which can e.g. be used within UMTS systems.

A further advantageous embodiment of the present invention is characterized by said combined antenna receiver unit comprising radio frequency receiving circuitry for transmitting/receiving signals in particular according to a second mode, e.g. a UMTS mode. Said combined antenna and receiver unit may comprise two types of RF receiving circuitry so as to be capable of handling GSM signals as well as UMTS signals.

Another advantageous variant of said combined antenna receiver unit is characterized by an interface, in particular for connecting said radio frequency receiving circuitry to baseband processing means.

A further advantageous embodiment of the present invention is characterized by said combined antenna receiver unit comprising a high speed interface, in particular for connecting baseband processing means to said demodulation means.

A further advantageous embodiment of the present invention is characterized by comprising a radio frequency interface which can be used to connect said combined antenna and receiver unit to e.g. input amplifiers of RF receiving circuitry and the like.

Yet another solution to the object of the present invention is given by a base station according to claim 22.

Further advantages and details are explained in the following detailed description with reference to the drawings.
- Fig. 1a: shows a transceiver according to a first embodiment of the present invention,
- Fig. 1b: shows a transceiver according to a second embodiment of the present invention,
- Fig. 1c: shows a transceiver according to a third embodiment of the present invention,
- Fig. 1d: shows a combined antenna receiver unit according to a fourth embodiment of the present invention,
- Fig. 2a: shows modulation means and a high speed interface according to the present invention,
- Fig. 2b: shows demodulation means and a high speed interface according to the present invention,
- Fig. 3a: shows in a simplified manner RF transmitting circuitry according to the present invention,
- Fig. 3b: shows in a simplified manner RF receiving circuitry according to the present invention,
- Fig. 4: shows an embodiment of a base station according to the present invention, and
- Fig. 5: shows a further embodiment of an inventive transceiver.

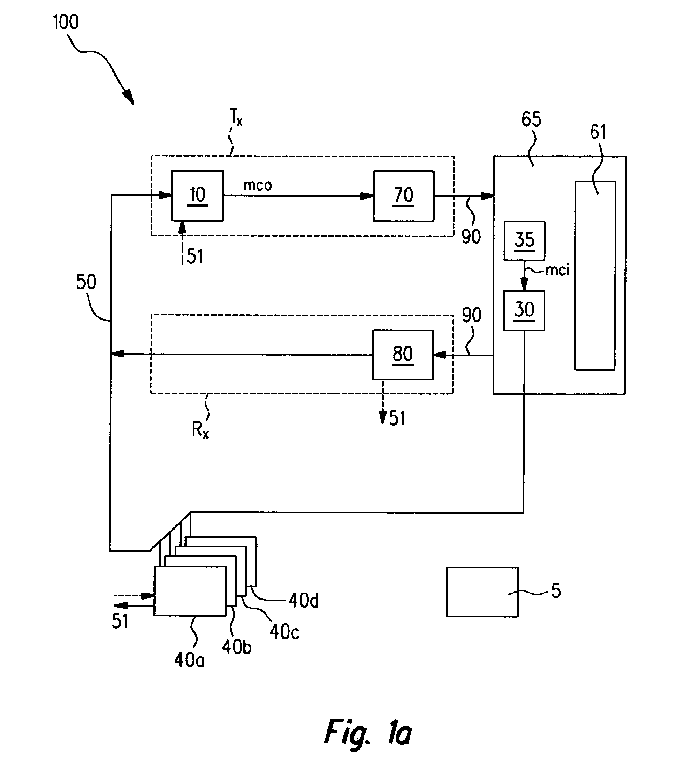

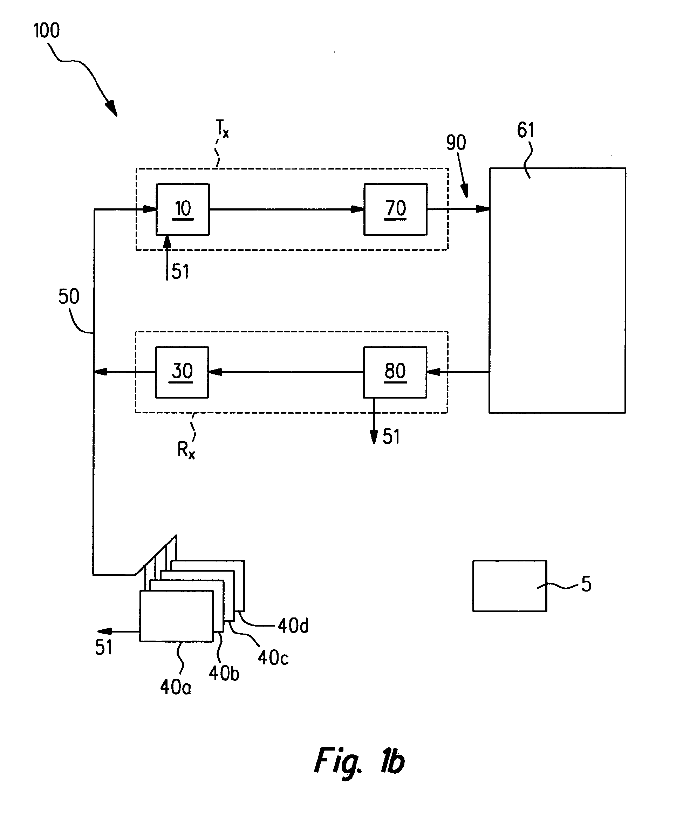

Fig. 1a shows a transceiver 100 of a base transceiver station (BTS, not shown) of a cellular communications network. Said transceiver 100 is used for transmitting and/or receiving signals exchanged over said cellular communications network in an uplink or a downlink direction.

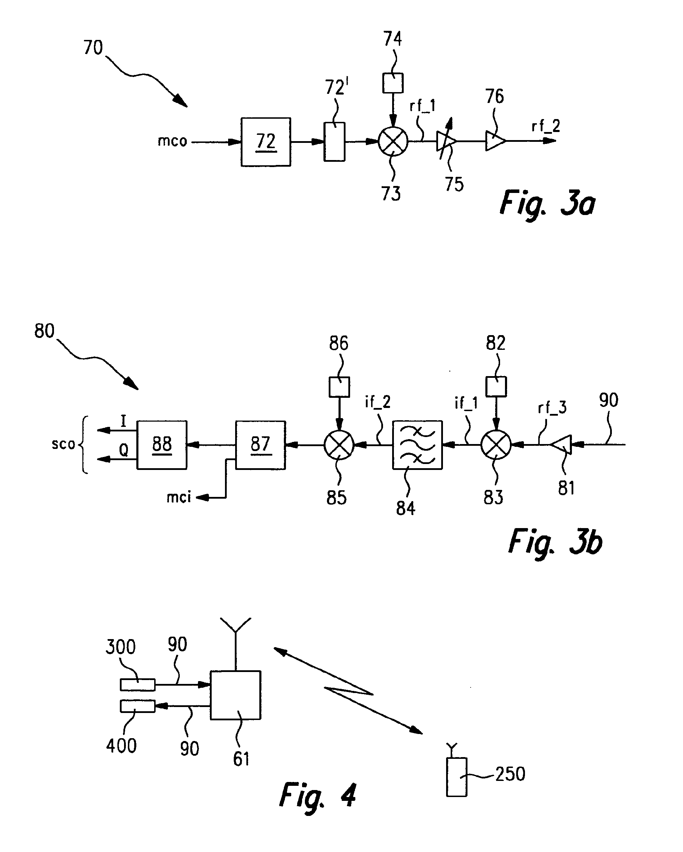

The term "downlink direction" denotes transmitting a signal from said base transceiver station's transceiver 100 to a mobile terminal 250 which is exemplary depicted in Fig. 4, whereas the term "uplink direction" denotes receiving a signal sent by e.g. said mobile terminal 250 to said transceiver 100.

Said transceiver 100 of Fig. 1a comprises a transmitting path Tx indicated by a dashed rectangle, and a receiving path Rx which is also indicated by a dashed rectangle within Fig. 1a.

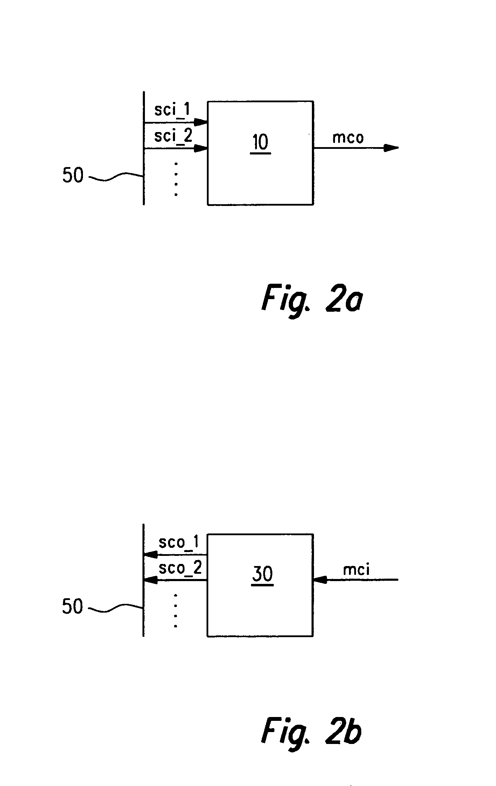

The transmitting path Tx is part of a transmitter 300 (Fig. 4) and comprises modulation means 10 which receive a plurality of input signals sci_1, sci_2, .... as depicted in Fig. 2a. The input signals sci_1, sci_2, .... are transmitted to said modulation means 10 by baseband processing means 40a, 40b, 40c, 40d via a high speed interface 50.

Said baseband processing means 40a, 40b, 40c, 40d provide for signal processing of received signals and signals to be sent by said transceiver 100 on a baseband frequency level. Some of said baseband processing means are capable of processing baseband signals used within GSM systems, and some of said baseband processing means are capable of processing baseband signals such as used within UMTS systems. It is also possible to provide baseband processing means that are capable of selectively or even simultaneously processing GSM baseband signals and UMTS baseband signals. Generally, baseband signals of UMTS signals comprise a higher bandwidth than baseband signals according to GSM systems. As a consequence, said baseband processing means used for processing UMTS baseband signals provide for a higher bandwidth, too.

Upon receiving said plurality of input signals sci_1, sci_2, .... within a UMTS mode of the transceiver 100, said modulation means 10 perform a signal synthesis based on said input signals sci_1, sci_2, .... and on corresponding carrier signals (not shown) thus assigning each of said input signals sci_1, sci_2, .... a respective carrier signal and transforming said input signals sci_1, sci_2, .... to a respective intermediate frequency. After that, the intermediate frequency signals are added within said modulation means. Thereby, a multi-carrier output signal mco is obtained as depicted in Fig. 1a and Fig. 2a e.g. corresponding to a FDMA (Frequency Division Multiple Access) scheme and/or a combined FDMA/CDMA (Code Division Multiple Access) scheme as known from prior art.

Said modulation means 10 may also comprise a clipper which
- preferably prior to said signal synthesis - cuts an amplitude of said input signals sci_1, sci_2, .... in order to provide for a proper conditioning of said multi-carrier output signal mco regarding to an optimal operating point of an amplifier, which is described with reference to Fig. 3a below.

Said RF transmitting circuitry 70 receives at its input said multi-carrier output signal mco which is converted by a digital to analog (DAC) converter 72, filtered by an intermediate frequency filter 72', and hereafter multiplied by a multiplier 73 with a carrier signal originating from an oscillator 74. This way, an RF signal rf_1 is obtained and amplified by a controllable preamplifier 75 and, after that, by a power amplifier 76 which passes the amplified RF signal rf_2 to said combined antenna receiver unit 65 of Fig. 1a via an RF interface 90.

Said controllable preamplifier 75 is controlled by said controller 5, Fig. 1a, so as to provide a proper input signal to said power amplifier 76 concerning an input power level and an optimal operating point of said power amplifier 76. A feedback path which may be required in particular for processing UMTS signals as well as bandpass filter or other conventional signal processing means are not shown in Fig. 3a and Fig. 3b for the sake of clarity. An optimal performance of the amplifier stage defined by said amplifiers 75, 76 is supported by said clipper mentioned above.

Predistortion means which are part of the aforementioned feedback path require operating parameters which can - during a UMTS mode of operation - be provided by signal processing means provided for GSM mode signal processing that would otherwise be unused.

It is also possible to process GSM signals in a downlink direction within said transceiver 100 in a manner similar to processing said UMTS signals. For this purpose, a corresponding GSM type baseband signal is sent to said transmitting path Tx by the according baseband processing means 40a. Since according to the GSM standard, no multicarrier synthesis and/or a CDMA processing is required for GSM signals, a mere transformation of the GSM signals input to said modulation means 10 to an intermediate frequency is performed, but no synthesis as previously described for UMTS signals. Said clipper may be deactivated for processing GSM signals, wherein said deactivation can e.g. be done by said controller 5.

However, since said single-carrier input signal sci_1 used while GSM operation has a comparatively low bandwidth within GSM mode, a conventional interface 51, i.e. an interface having a lower data transmission rate as said high speed interface 50, may also be used to connect the GSM baseband processing means 40a to said modulation means 10. Said conventional interface 51 is symbolized in Fig. 1a by a corresponding arrow 51 originating from said baseband processing means 40a and pointing to said modulation means 10, respectively.

While processing said GSM signals within said transceiver 100 in the downlink direction, the RF transmitting circuitry 70 is only provided with the respective intermediate frequency GSM signal output by said modulation means 10 instead of receiving the multi-carrier output signal mco as depicted in Fig. 3a.

Accordingly, the intermediate frequency filter 72' is switchable between a high bandwidth of about 60MHz for UMTS operation and a low bandwidth of about 200kHz for GSM operation.

In an uplink direction, i.e. for receiving signals from mobile terminals 250 (Fig. 4), said transceiver 100 according to the first embodiment of the present invention processes signals by means of said combined antenna receiver unit 65 and a receiving path Rx as depicted in Fig. 1a.

Said receiving path Rx is part of a receiver 400 (Fig. 4) and is hereby solely used for processing received signals according to the GSM standard, whereas a processing of received signals according to the UMTS standard is performed by RF receiving circuitry 35 and demodulation means 30, both of which are integrated into said combined antenna receiver unit 65 to provide short signal paths and high modularity for future expansions of said transceiver 100.

Upon receiving an RF signal from said mobile terminal 250 (Fig. 4) in a UMTS mode of said transceiver 100, said RF signal is fed into said RF receiving circuitry 35 from said antenna network 61, the process of which is not depicted in Fig. 1a in detail but which can be achieved by conventional RF cables or other suitable connections such as RF connectors for supporting rack mounting.

The RF signal is also fed to RF receiving circuitry 80 of a receiving path Rx of said transceiver 100, which is used for further processing said RF signal in a GSM mode of said transceiver 100.

The following description first deals with the receiving path Rx provided for a GSM mode of said transceiver 100.

Said receiving path Rx receives said RF signal via an RF interface 90 which may e.g. be a RF cable or RF connector capable of rack mounting and thus allowing a modular use. Said RF signal is processed within said RF receiving circuitry 80 which is further detailed with reference to Fig. 3b.

As can be seen from Fig. 3b, the RF signal provided at an input of said RF receiving circuitry 80 is first of all amplified by an amplifier 81 which may e.g. be a low noise amplifier (LNA). After that, the amplified RF signal rf_3 is mixed by a multiplier 83 and a carrier signal that is generated within an oscillator 82 thus converting the amplified RF signal rf_3 from an RF range into an intermediate frequency (IF) range, whereby an IF signal if_1 is obtained.

A bandpass filtering is applied to said IF signal if_1 to obtain a filtered IF signal if_2, which is hereafter mixed by a multiplier 85 and a carrier signal generated within the oscillator 86. Thereby, the filtered IF signal if_2 is transformed into a baseband signal which is sampled by an analog to digital (ADC) converter 87, and the sampled baseband signal is finally separated into an in-phase component I and a quadrature component Q by the I/Q demodulator 88.

Said in-phase component I and said quadrature component Q constitute a single-carrier output signal sco which is directed by said RF receiving circuitry 80 to said baseband processing means 40a capable of processing GSM baseband signals by using said high frequency interface 50 depicted in Fig. 1a.

As already explained beforehand, a GSM baseband signal such as said single-carrier output signal sco, Fig. 3b, does not require the full data transmission rate provided by said high speed interface 50 and thus, said conventional interface 51 can also be used for transmitting said single-carrier output signal sco from said RF receiving circuitry 80 to said baseband processig means 40a, too. This is indicated by dashed arrows 51 originating from said RF receiving circuitry 80 and pointing to said baseband processing means 40a, respectively.

According to the present invention, the transceiver 100 of Fig. 1a is also capable of receiving and processing UMTS signals, which will be described in the following paragraphs.

As already explained above, in a UMTS mode of said transceiver 100, said received RF signal is fed into said RF receiving circuitry 35 (Fig. 1a) from said antenna network 61.

Said RF receiving circuitry 35 provides for a conversion of said received RF signal to a baseband signal, which can be done by a process of downconverting said received RF signal directly to a baseband frequency range or by using an intermediate frequency (IF) mixing stage. Said process of downconverting can be performed as described with reference to said RF receiving circuitry 80 (Fig. 3b) of the receiving path Rx provided for processing of GSM signals. An important difference between said RF receiving circuitry 80 for GSM signals and said RF receiving circuitry 35 for UMTS signals is the higher bandwidth demand of the UMTS signal which is up to about 20MHz or higher, whereas some 100kHz are sufficient for the GSM signals.

Processing a received RF signal within said RF receiving circuitry 35 yields a multi-carrier input signal mci, Fig. 2b, which is input to demodulation means 30 that are provided for demodulating UMTS signals.

Said demodulation means 30 shown in detail within Fig. 2b perform a demodulation of said multi-carrier input signal mci so as to obtain a plurality of single-carrier output signals sco_1, sco_2, .... that are transmitted to the corresponding baseband processing means 40a to 40d (Fig. 1a) via said high speed interface 50.

Summarizingly, the transceiver 100 depicted in Fig. 1a is capable of transmitting and receiving signals both according to a GSM mode and a UMTS mode, wherein substantial parts of a conventional GSM transceiver such as e.g. the RF receiving circuitry 80 or the RF transmitting circuitry 70 and a controller 5 and the like can be used with minor modifications or even without any modifications. This way, it is possible for communications network operators to (re)use existing technologies and corresponding infrastructures for preparing a smooth and gradual migration from GSM communications networks to UMTS communications networks.

Such a gradual migration is especially advantageous concerning network elements such as base transceiver stations (BTS) and correspondingly transceivers, a very high number of which is required for an operation of said communications network.

A further embodiment of the present invention is shown in Fig. 1b, wherein a transmitting path Tx of said transceiver 100 is identical to the transmitting path Tx as explained with reference to Fig. 1a. Consequently, said transmitting path Tx of said transceiver 100 of Fig. 1b is also capable of processing GSM signals as well as UMTS signals.

However, concerning the uplink direction, i.e. when receiving signals from a mobile terminal 250 (Fig. 4), said transceiver 100 of Fig. 1b differs from the previously presented embodiment in that its receiving path Rx comprises RF receiving circuitry 80 and demodulation means 30. Thus said receiving path Rx is capable of processing GSM signals, which is entirely performed within said RF receiving circuitry 80 as described above, and furthermore, said receiving path Rx is capable of processing UMTS signals.

Said processing of UMTS signals is accomplished as follows: upon receiving an RF signal via an RF interface 90 from an antenna network 61, said RF receiving circuitry 80 provides for a conversion of said received RF signal to a baseband signal, which can be done by a process of downconverting said received RF signal directly to a baseband frequency range or by using an intermediate frequency (IF) mixing stage as already explained above.

Since both UMTS signals and GSM signals have to be processed by said RF receiving circuitry 80 of Fig. 1b, a suitable bandwidth of said receiving circuitry 80 has to be provided accordingly, i.e. a bandwidth of about 20Mhz. Apart from that, a downconversion of said received RF signal to a baseband signal can be done as depicted in Fig. 3b.

In a GSM mode of operation, said receiving path Rx is controlled by said controller 5 (Fig. 1b) such that said single-carrier output signal sco (Fig. 3b) is directly transmitted from said RF receiving circuitry 80 to said baseband processing means 40a capable of processing GSM baseband signals, which can be done via the high speed interface 50. Correspondingly, a conventional interface (cf. arrows 51 of Fig. 1a) may also be used for such a transmission.

In a UMTS mode of operation, said RF receiving circuitry 80 yields at its output a multi-carrier input signal mci (not shown in Fig. 1b, cf. Fig. 2b), which e.g. can be obtained at an output of the ADC 87 (Fig. 3b), and the receiving path Rx and its receiving circuit 80, respectively, is controlled by said controller 5 (Fig. 1b) such that said multi-carrier input signal mci is input to said demodulation means 30 which perform a demodulation as already explained above. Said demodulation means 30 are connected to the high speed interface 50 over which said single-carrier output signals sco_1, sco_2, .... (Fig. 2b) are transferred to the corresponding baseband processing means 40a to 40d which are capable of processing UMTS baseband signals.

This embodiment of the present invention advantageously enables to use a conventional antenna network 61 which is already comprised within existing GSM base transceiver station (BTS) infrastructures. Hence no modifications concerning existing antenna networks are required, and few modifications of existing GSM transceivers are required, mainly regarding to a bandwidth of signal processing elements such as said RF receiving circuitry 80.

Another embodiment of the transceiver 100 according to the present invention is depicted in Fig. 1c.

Said transceiver 100 comprises a transmitting path Tx as described with reference to Fig. 1a, which can be operated in a GSM mode and in a UMTS mode. Furthermore, said transceiver 100 of Fig. 1c comprises a first receiving path Rx identical to the receiving path Rx of Fig. 1a capable of processing GSM signals. Apart from that, the transceiver 100 of Fig. 1c comprises a further receiving path Rx' capable of processing UMTS signals.

Demodulation means 30 of said further receiving path Rx' are provided with a multi-carrier input signal mci (cf. Fig. 2b) from RF receiving circuitry 35 comprised within a combined antenna receiver unit 65 via an interface 55. Said interface 55 is not required to be capable of handling RF signals, because a downconversion from an RF range to a baseband signal is already performed within said RF receiving circuitry 35.

As with the other embodiments of the transceiver 100, said demodulation means 30 are connected to baseband processing means 40a to 40d by the high speed interface 50.

The present embodiment is capable of handling GSM signals as well as UMTS signals, wherein separate receiving paths Rx, Rx' and the respective receivers (not shown) comprising said receiving paths Rx, Rx' are provided for GSM operation and UMTS operation, respectively. As an advantage, existing RF receiving circuitry 80 of GSM transceiver can be (re)used without modification. It is even possible to operate the transceiver 100 in a GSM receiving mode simultaneously to a UMTS receiving mode due to separate receiving paths Rx, Rx'.

Furthermore, it is possible to provide a transceiver 100 with a conventional antenna network 61 and a separate UMTS receiver module (not shown) having a dedicated receiving path with RF receiving circuitry 35 and demodulation means 30 for processing UMTS signals only. Said separate UMTS receiver module may have a separate controller and may be connected to said antenna network 61 the same way a GSM transceiver is connected to it.

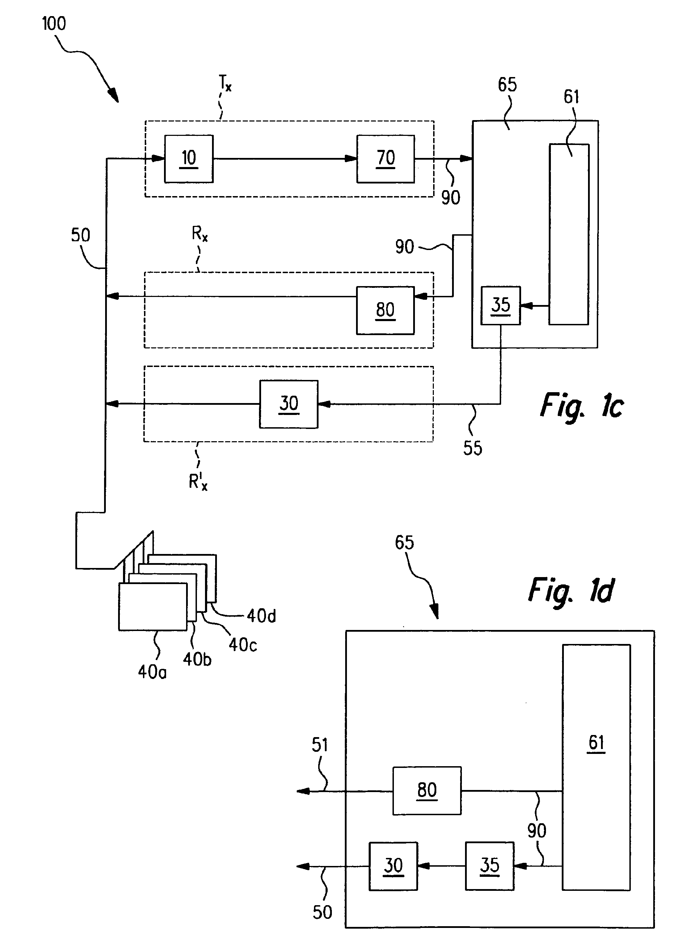

A further embodiment of the present inventions proposes a combined antenna receiver circuit 65 according to Fig. 1d that comprises an antenna network 61 and in addition to RF receiving circuitry 35 and demodulation means 30 for processing UMTS signals further comprises RF receiving circuitry 80 for GSM signals. Said demodulation means 30 are connected to said baseband processing means 40a to 40d (Fig. 1a) by a high speed interface 50, whereas said RF receiving circuitry 80 for GSM signals is connected to said baseband processing means 40a by a conventional interface 51 as shown in Fig. 1d.

The aforementioned combination of RF receiving circuitry 35, 80 within said combined antenna receiver unit 65 reduces an amount of RF components and interfaces required within elements of the transceiver 100 other than said combined antenna receiver circuit 65.

Generally, the present invention is not limited to either analog or digital signal processing. It is also possible to combine analog and digital signal processing, respectively, regardless of the mode of operation (GSM or UMTS), as long as bandwidth demands or a sufficient data transmission rate, respectively, is provided by the respective elements.

The transmitter 300, the receiver 400, the transceiver 100 and the combined antenna receiver unit 65 according to the present invention enable providing base transceiver stations (BTS or NodeB for UMTS, respectively) that are capable of transmitting and receiving signals both according to a GSM mode and a UMTS mode, wherein substantial parts of a conventional GSM transceiver and/or conventional antenna networks can be used with minor modifications or even without any modifications. It is therefore possible for communications network operators to (re)use existing equipment and infrastructures for preparing a smooth and gradual migration from GSM communications networks to UMTS communications networks.

A very advantageous embodiment of the present invention proposes to operate said transceiver in both a GSM mode and a UMTS mode at a frequency range of about 890 MHz to 960 MHz and/or 1710 MHz to 1990 MHz. Especially the lower frequency range, i.e. 890 MHz to 960 MHz is of great advantage since it offers a more comprehensive area coverage than systems operating in the 2 GHz range due to propagation characteristics of the respective signals or electromagnetic waves, rather.

For instance, a network operator is operating a GSM base transceiver station (BTS) of its communications network in a so-called 3x2 (GSM) configuration, wherein said BTS provides three spatial sectors within a cell covered by said BTS, and wherein each cell is assigned two carriers, which is a very common BTS configuration that is widely used by mobile network operators.

To migrate smoothly from GSM operation to UMTS operation within said communications network, the operator may modify the configuration of said BTS to a combination of a 3x1 GSM configuration and a 3x1 UMTS configuration, both of which are being operated in parallel. In this case, the mentioned cell is provided with three sectors and one carrier per sector both in a GSM mode and in a UMTS mode. Such a configuration can easily be achieved by using the transceiver 100 according to the present invention, because said transceiver 100 enables changing a GSM operation to a UMTS operation very easily.

Later on, if a plurality of mobile terminals 250 is capable of UMTS operation, the network operator may cancel GSM operation within said BTS and may modify the BTS to operate in a 3xn UMTS configuration, wherein n denotes a number of carriers employed. The remaining GSM transceiver equipment can e.g. be used for providing transmitter diversity during UMTS operation.

Furthermore, conventional transceivers that are capable of processing signals according to the EDGE (Enhanced Data Rates for GSM Evolution) standard require are suitable for processing CDMA signals without substantial modifications.

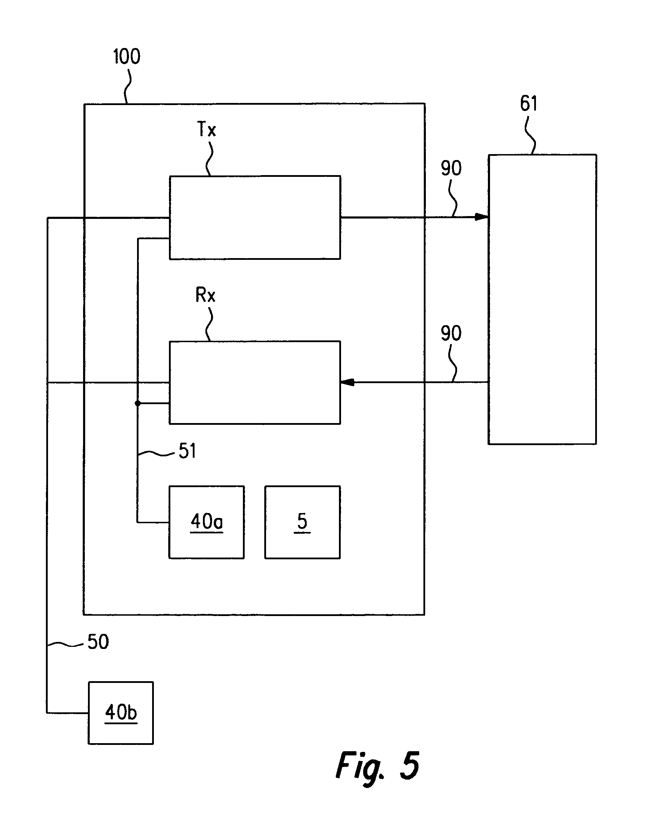

A further advantageous embodiment of the inventive transceiver 100 is depicted in Fig. 5. Said transceiver comprises a transmitting path Tx as well as a receiving path Rx.

The transmitting path Tx and the receiving path Rx are connected to an antenna network 61 by means of a respective RF interface 90.

Furthermore, within said inventive transceiver 100 baseband processing means 40a are provided which are connected to the transmitting path Tx and the receiving path Rx with the conventional interface 51.

A controller 5 is also provided in said transceiver 100, e.g. for controlling a controllable preamplifier 75 (Fig. 3a) as provided within the transmitting path Tx.

During GSM operation of said transceiver 100, baseband processing means 40a are employed for performing baseband signal processing as required according to GSM standard.

A UMTS operation is also possible within said transceiver 100, wherein baseband processing means 40b are used, which are connected to the transmitting path Tx and the receiving path Rx by means of a high speed interface 50.

During said UMTS operation, the baseband processing means 40a provided for GSM operation are unused, because for baseband signal processing related to UMTS operation said baseband processing means 40b are provided. Hence said baseband processing means 40a may advantageously be employed to support the UMTS operation e.g. by calculating operating parameters for predistortion means or the like used for UMTS operation. For this purpose, the conventional interface 51 is designed as a bi-directional interface.

## Claims

1. Transmitter (300) for transmitting signals according to at least a first mode, in particular a GSM (Global Systems for Mobile Communications) mode, **characterized in that** a transmitting path (Tx) of said transmitter (300) is capable of processing baseband signals having different bandwidths.

2. Transmitter (300) according to claim 1, **characterized in that** said transmitting path (Tx) is switchable from a low bandwidth, in particular a bandwidth of about several hundred kHz, to a high bandwidth, in particular a bandwidth of about 20 MHz.

3. Transmitter (300) according to claim 1 or 2, **characterized by** comprising modulation means (10) capable of combining one or more input signals (sci_1, sci_2, ....) to obtain a multi-carrier output signal (mco).

4. Transmitter (300) according to claim 1, 2 or 3, **characterized by** a high speed interface.

5. Transmitter (300) according to one of the preceding claims, **characterized by** said transmitting path (Tx) comprising a clipper (20).

6. Receiver (400) for receiving signals according to at least a first mode, in particular a GSM (Global Systems for Mobile Communications) mode, **characterized in that** a receiving path (Rx) of said receiver (400) is capable of processing baseband signals having different bandwidths.

7. Receiver (400) according to claim 6, **characterized in that** said receiving path (Rx) is switchable from a low bandwidth, in particular a bandwidth of about several hundred kHz, to a high bandwidth, in particular a bandwidth of about 20 MHz.

8. Receiver (400) according to claim 6 or 7, **characterized by** comprising demodulation means (30) for obtaining one or more output signals (sco_1, sco_2, ....) from a multi-carrier input signal (mci).

9. Transceiver (100) comprising a transmitting path (Tx) and/or a receiving path (Rx) for transmitting and/or receiving signals according to at least a first mode, in particular a GSM (Global Systems for Mobile Communications) mode, wherein said transmitting path (Tx) comprises radio frequency (RF) transmitting circuitry (70), and wherein said receiving path (Rx) comprises radio frequency (RF) receiving circuitry (80), **characterized by** said transmitting path (Tx) comprising modulation means (10) capable of combining one or more input signals (sci_1, sci_2, ....) to obtain a multi-carrier output signal (mco).

10. Transceiver (100) according to claim 9, **characterized by** comprising a combined antenna receiver unit (65), wherein said combined antenna receiver unit (65) comprises an antenna network (61), radio frequency (RF) receiving circuitry (35) and demodulation means (30) for obtaining one or more output signals (sco_1, sco_2, ....) from a multi-carrier input signal (mci).

11. Transceiver (100) according to one of the claims 9 to 10, **characterized by** said receiving path (Rx) comprising demodulation means (30), in particular for obtaining one or more output signals (sco_1, sco_2, ....) from a multi-carrier input signal (mci).

12. Transceiver (100) according to one of the claims 9 to 11, **characterized by** comprising a high speed interface (50), in particular for connecting baseband processing means (40a, 40b, ....) to said modulation means (10) and/or to said demodulation means (30).

13. Transceiver (100) according to one of the claims 9 to 12, **characterized by** said transmitting path (Tx) comprising a clipper (20).

14. Transceiver (100) according to one of the claims 9 to 13, **characterized by** a radio frequency (RF) interface (90), in particular for transmitting and/or receiving a radio frequency signal to/from an antenna network (61) and/or a/said combined antenna receiver unit (65).

15. Transceiver (100) according to one of the preceding claims 9 to 14, **characterized by** being capable of using a frequency range of approximately 800 MHz to approximately 2600 MHz for transmitting/receiving said signals, in particular a frequency range of approximately 890 MHz to approximately 960 MHz and/or a frequency range of approximately 1710 MHz to approximately 1810 MHz and/or a frequency range of approximately 1850 MHz to approximately 1990 MHz and/or a frequency range of approximately 2110 MHz to approximately 2170 MHz.

16. Transceiver (100) according to one of the claims 9 to 15, **characterized in that** components of said transceiver (100) which process in particular baseband signals are switchable regarding to a bandwidth of said baseband signals, in particular between a first bandwidth of about a few hundred kHz and a second bandwidth of about 20 MHz.

17. Transceiver (100) according to one of the claims 9 to 16, **characterized by** being capable of processing signals according to a GSM (Global System for Mobile Communications) standard and/or according to a UMTS (Universal Mobile Telecommunications System) standard.

18. Transceiver (100) according to one of the claims 9 to 17, **characterized by** comprising at least one transmitter (300) according to one of the claims 1 to 5 and/or at least one receiver (400) according to one of the claims 6 to 8.

19. Combined antenna receiver unit (65), **characterized by** comprising an antenna network (61) and radio frequency (RF) receiving circuitry (35, 80).

20. Combined antenna receiver unit (65) according to claim 19, **characterized by** demodulation means (30) for obtaining one or more output signals (sco 1, sco 2, ....) from a multi-carrier input signal (mci).

21. Combined antenna receiver unit (65) according to one of the claims 19 to 20, **characterized by** being capable of processing signals according to a GSM (Global System for Mobile Communications) standard and/or according to a UMTS (Universal Mobile Telecommunications System) standard.

22. Base station for a cellular communications network, **characterized by** comprising at least one transmitter (300) according to one of the claims 1 to 5 and/or at least one receiver (400) according to one of the claims 6 to 9 and/or at least one transceiver (100) according to one of the claims 9 to 18 and/or at least one combined antenna receiver unit (65) according to one of the claims 19 to 21.
